# EUROPÄISCHE PATENTANMELDUNG

(11) **EP 4 417 546 A1**
(43) Veröffentlichungstag der Anmeldung: **21.08.2024**
(21) Anmeldenummer: 24158516.5
(22) Anmeldetag: 20.02.2024
(51) Int. Cl.: B65G 1/14

(54) **STAPELSÄULE**

(30) Priorität: 20.02.2023 DE 102023104100; 15.02.2024 DE 102024104243
(71) Anmelder: MTS Maschinenbau GmbH, 88512 Mengen (DE)
(72) Erfinder: LAIBLE, Dr. Eckhard, 71144 Leinfelden-Schlechtenmühle (DE)
(74) Vertreter: Patentanwälte und Rechtsanwalt Weiß, Arat & Partner mbB

(57) **Zusammenfassung**

Die Erfindung betrifft eine Stapelsäule zum Lagern von Lagergütern übereinander oder nebeneinander in gegenseitigen Abständen auf einer Klinke (5.1-5.6), welche zwischen zwei Seitenwangen (1.1, 1.2) drehbar an einem Achsbolzen gelagert ist, wobei die zwei Seitenwangen (1.1, 1.2) mit einer gemeinsamen Rückwand (2) einen U-Körper (3) bilden, wobei der U-Körper (3) eine Fußplatte (4) umfasst, wobei die Klinke einen Gestängebolzen (9) aufweist, wobei der Gestängebolzen (9) innerhalb eines gebogenen Langlochs (8) der Seitenwange (1.1, 1.2) beweglich ist und damit die Klinke (5.1- 5.6) mobilisiert, wobei der Gestängebolzen (9) durch eine der Seitenwangen (1.1, 1.2) hindurch verlängert ist, wobei der Gestängebolzen (9) aus der Bereitschaftslage in die Arbeitslage fahrend an einer Schräge (11) einer Verriegelungskulisse (14) entlang gleitet und dabei die Verriegelungskulisse (14) aus einer Ausgangslage in eine Verriegelungslage bringt, wobei die Verriegelungskulisse (14) zwischen der Seitenwange (1.1, 1.2) und einem Schieber (19) angeordnet ist, wobei die Verriegelungskulisse (14) eine Drehachse (13) und eine Federfixierung (12) aufweist, wobei zwischen der Federfixierung (12) und einem Ankerpunkt (10) eine Schraubenfeder (20) angeordnet ist, wobei die Federfixierung (12) durch einen Ausnehmung (15) des Schiebers (19) von der Verriegelungskulisse (14) weg durch den Ausnehmung (15) des Schiebers (19) hindurch angeordnet ist und die Schraubenfeder (20) zwischen dem Ankerpunkt (10) und der Federfixierung (12) angeordnet ist.

## Beschreibung

### Technisches Gebiet

Die Erfindung betrifft eine Stapelsäule zum Lagern von Lagergüter nach dem Oberbegriff des Anspruchs 1.

### Stand der Technik

Derartige Stapelsäulen bzw. in ihnen integrierte Klinken sind beispielsweise aus der DE 38 11 310 C2 bekannt. Meist handelt es sich um senkrechte Stapelsäulen, die in einem Viereck angeordnet sind. Aus technischen Gründen kann es sich aber auch als ratsam erweisen, diese Stapelsäulen schräg anzuordnen, wie dies in der DE 41 33 464 A1 gezeigt ist. Ferner besteht auch die Möglichkeit der horizontalen Anordnung der Stapelsäule beispielsweise nach der DE 40 20 864 A1.

Bei all diesen Stapelsäulen ruht das Lagergut in oder an Tragarmen von Klinkenhebeln, wobei die Gefahr besteht, dass das Lagergut verschoben wird.

Insbesondere wenn die Stapelsäulen transportierbar ausgebildet sind, wirkt sich dieser Nachteil erheblich ungünstig aus. Durch das Verschieben auf den Tragarmen kann es zudem zu Beschädigungen des Lagerguts kommen. Deshalb wird versucht, das Lagergut auf den Stapelsäulen zusätzlich zu sichern. Gemäss der DE 196 47 578 A1 kann dies dadurch geschehen, dass zwischen zwei benachbarten Klinkenhebeln eine Zwischenklinke vorgesehen wird, welche nach einem Auf- oder Anlegen des Lagerguts auf oder an dem einen Klinkenhebel durch die Schwenkbewegung eines anderen Klinkenhebels auf oder an das Lagergut andererseits des einen Klinkenhebels auf- oder anlegbar ist.

Ferner ist bei vielen Stapelsäulen vorgesehen, dass die aufeinanderfolgenden Kliniken über ein Gestänge miteinander verbunden sind, sodass ihre Bewegung voneinander abhängig ist. In Arbeitsstellung werden diese Klinken dann nur durch das Gestänge bzw. das Lagergut gehalten.

### Aufgabe der Erfindung

Die Aufgabe der vorliegenden Erfindung ist es, eine verbesserte Festlegung der Klinken in ihrer Arbeitsstellung zu gewährleisten.

### Lösung der Aufgabe

Zur Lösung der Aufgabe führen die Merkmale nach dem Anspruch 1.

Die erfindungsgemäße Stapelsäule zum Lagern von Lagergütern übereinander oder nebeneinander in gegenseitigen Abständen auf einer Klinke ermöglicht die einzelne Verriegelung der einzelnen übereinander oder nebeneinander liegender Klinken. Dabei sind die Klinken zunächst zwischen zwei Seitenwangen drehbar an einem Achsbolzen gelagert, wobei die zwei Seitenwangen mit einer gemeinsamen Rückwand einen U-Körper bilden, wobei der U-Körper eine Fußplatte umfasst, wobei die Klinke einen Gestängebolzen aufweist, wobei der Gestängebolzen innerhalb eines geraden oder gebogenen Langlochs der Seitenwange beweglich ist und damit die Klinke mobilisiert. Mobilisiert bedeutet in diesem Zusammenhang, dass die Klinke von einer Ruhestellung zunächst in eine Bereitschaftsstellung und anschließend in eine Arbeitsstellung gebracht werden. Ausnahme hiervon ist die erste oder unterste Klinke. Es handelt sich um die Klinke, die am nächsten an der Fußplatte angeordnet ist. Die unterste Klinke kennt in der Regel keine Ruhestellung, sondern ist entweder in der Bereitschaftsstellung oder in der Arbeitsstellung.

Die oben beschriebene Mobilisierung der Klinke findet über ein Gestänge statt, die die Position der Klinke aus einer Ruhestellung über eine Bereitschaftsstellung in eine Arbeitsstellung und wieder zurück schwenkbar bestimmt, wobei das Gestänge mit dem Gestängebolzen wirkverbunden ist.

Der Gestängebolzen ist erfindungsgemäß zumindest durch eine der Seitenwangen hindurch verlängert, wobei der Gestängebolzen aus der Bereitschaftslage in die Arbeitslage fahrend an einer Schräge einer Verriegelungskulisse entlang gleitet und dabei die Verriegelungskulisse aus einer Ausgangslage in eine Verriegelungslage bringt. Dabei geschieht das Erreichen der Arbeitslage immer zeitgleich mit dem Erreichen der jeweiligen Verriegelungslage jeder einzelnen Klinke. Das Verriegeln jeder einzelnen Klinke für sich, birgt den Vorteil, dass auch eine Teilbeladung der Stapelsäule möglich ist, ohne dass die nicht genutzten Klinken ebenfalls in die Arbeitslage gedrückt werden müssen. Bei einer Teilbeladung werden also tatsächlich nur diejenigen Klinken durch das Ladegut in Arbeitslage gebracht, die benötigt werden. Dies erleichtert die spätere Handhabung während der Entnahme des Ladeguts in einer Fertigungshalle.

Die Verriegelungskulisse ist dabei zwischen der Seitenwange und einem Schieber angeordnet, wobei die Verriegelungskulisse eine Drehachse und eine Federfixierung aufweist. Die Verriegelungskulisse ist dazu über die Drehachse mit der Seitenwange verbunden. Dadurch erhält sie die Funktionalität zwischen den beiden beweglich angeordneten Bauelementen, und zwar der Klinke und dem Schieber an dem nicht beweglichen Teil, und zwar dem U-Körper hin und her zu schwenken.

Zwischen der Federfixierung und einem Ankerpunkt ist eine Schraubenfeder angeordnet. Die Federfixierung ist stabförmig ausgeführt und ragt im rechten Winkel von der Verriegelungskulisse ab, und ragt dabei in eingebautem Zustand durch eine Ausnehmung des Schiebers von der Verriegelungskulisse weg durch die Ausnehmung des Schiebers hindurch. Dabei ist die Schraubenfeder zwischen dem Ankerpunkt und der Federfixierung angeordnet. Durch diese Anordnung wird in entriegeltem und verriegeltem Zustand die Verriegelungskulisse immer wieder auf die gleiche Position zurück geschwenkt.

Die Verriegelungskulisse bildet zwischen der Schräge und der Drehachse eine Bolzenaufnahme aus. Die Form des Gestängebolzens und der Bolzenaufnahme sind aufeinander abzustimmen. Das bedeutet, dass ein Hinein- und Hinausgleiten des Gestängebolzens in die Bolzenaufnahme oder aus der Bolzenaufnahme immer ohne Verhaken möglich sein sollte. Bevorzugt handelt es sich bei der Bolzenaufnahme um einen Teilkreis und bei dem Gestängebolzen um ein Bauteil, das einen passenden Kreisquerschnitt aufweist. Andere denkbare Formen sind aber auch oval oder mehreckig, wenn die oben genannte Funktionalität gegeben bleibt.

Im Rahmen der Funktionalität gleitet der Gestängebolzen an der Schräge bis zur Bolzenaufnahme entlang, wobei die Klinke bei ihrem Weg von der Bereitschaftsstellung in die Arbeitsstellung die Verriegelungskulisse betätigt und dabei die Schraubenfeder eine Kraft aufnimmt, wobei beim Erreichen der Arbeitsstellung der Klinke der Gestängebolzen in die Bolzenaufnahme eingleitet, wobei die Schraubenfeder die Kraft abgibt. Dadurch wird bei der Aufnahme eines Ladeguts nicht nur automatisch das Gestänge betätigt, um die nächste Klinke in die Bereitschaftsstellung zu bringen, sondern auch gleichzeitig die Verriegelungskulisse aktiviert.

Der Schieber ist bevorzugt ein Eckprofil und an dem Übergang der Seitenwange zu der Rückwand angeordnet ist. Es kann aber auch nur ein Streifenprofil oder U-Profil sein, um die gleiche Funktionalität zu erhalten. Wichtig ist dabei, dass der Schieber in Form und Größe an die Form und Größe des U-Körpers angepasst werden muss.

Der Schieber ist entlang der Seitenwange oder des U-Körpers in definiertem Maße hin zu der Fußplatte oder weg von der Fußplatte beweglich angeordnet. Der Schieber ist dabei so angeordnet, dass er zu der Seitenwange oder der Rückwand eine Schieberfeder aufweist, wobei der Schieber gegen die Kraft der Schieberfeder bewegbar ist, und dabei die Ausnehmung über die Federfixierung die Verriegelungskulisse entriegelt. Dadurch ist eine schnelle und einfache Verriegelung aller Klinken auf einmal möglich, da nicht die Summe aller Schraubenfedern der Verriegelungskulissen überwunden werden muss, sondern lediglich die Kraft der Schieberfeder.

Die Fußplatte weist einen Entriegelungsausnehmung auf, wobei der Schieber über der Entriegelungsausnehmung einen Entriegelungszunge aufweist. Dies ermöglicht ein automatisches betätigen des Schiebers zur Entriegelung aller Klinken auf einmal, indem beispielsweise eine Erhebung oder ein Pin auf dem Untergrund angeordnet ist, der beim Absetzen der Stapelsäule durch die Entriegelungsausnehmung hindurchgreift und die Entriegelungszunge vom Untergrund bzw. der Fußplatte wegdrückt und dabei wiederum den Schieber allein durch das Eigengewicht der Stapelsäule und der darin gelagerten Lagergüter entriegelt und für die Entnahme in der Produktion bereitstellt.

Jede Klinke hat einen eigenen Achsbolzen. Der Achsbolzen weist eine Achsbolzenfeder auf, die den Achsbolzen umgreift und mit einem Federbein an der Rückwand anliegt und mit einem weiteren Federbein an der Klinke oder dem Gestängebolzen anliegt. Die Achsbolzenfeder dient bei der Entriegelung aller Klinken dazu, dass der Gestängebolzen aus der Bolzenaufnahme der Verriegelungskulisse hinausgedrückt und in Wirkverbindung mit der Schräge gebracht wird, damit die Klinke von der Arbeitsstellung wieder zurück in die Ruhestellung schwenken kann, wenn das Ladegut entnommen wurde. Davon ist wiederum die Ausnahme zu betrachten, dass die unterste Klinke von der Arbeitsstellung in die Bereitschaftsstellung zurückfährt.

Die Erfindung hat dabei den Vorteil, dass eine Einzelverriegelung jeder einzelnen Klinke stattfindet. In erster Linie bleibt es dabei, dass die Klinken jeweils von ihrer Ruhestellung in eine Bereitschaftsstellung und dann von einer Bereitschaftsstellung in die Arbeitsstellung durch Verbindung mit einem Gestänge bewegt werden. In der Arbeitsstellung werden sie dann aber separat einzeln durch ein Verriegelungselement festgelegt.

In einem bevorzugten Ausführungsbeispiel der Erfindung ist dieses Verriegelungselement ein Haken der Verriegelungskulisse, der über eine Drehachse an zumindest einer Seitenwange festgelegt ist. Dieser Haken ist so schwenkbar, dass er beispielsweise einen Gestängebolzen übergreifen kann, welcher von der Klinke absteht. Selbstverständlich könnte auch in der Klinke eine Ausnehmung vorhanden sein, in die ein Verriegelungselement eingreift. Hier sind viele Möglichkeiten denkbar, die von der vorliegenden Erfindung umfasst sein sollen.

Die Betätigung des Hakens soll bevorzugt durch die Bewegung der Klinke erfolgen. Wird beispielsweise der Gestängebolzen als Widerlager gewählt, so besitzt beispielsweise der Haken eine Schräge, an der der Gestängebolzen entlanggleiten kann und so den Haken um seine Drehachse dreht, bis der Gestängebolzen schlussendlich in eine Bolzenaufnahme einfährt und der Haken den Gestängebolzen übergreift. Diese Verriegelung ist einfach und sicher.

Zur Unterstützung der Drehbewegung des Hakens um seine Drehachse und zur gesicherten Festlegung der Riegelposition, in welcher der Haken den Gestängebolzen übergreift, ist ein Kraftspeicher vorgesehen, gegen dessen Kraft der Haken beispielsweise beim Abgleiten des Gestängebolzens an der Schräge gedreht wird. Der Einfachheit halber, ist dieser Kraftspeicher eine Schraubenfeder. Die Verbindung mit der Schraubenfeder erfolgt über einen Fortsatz, der andererseits der Drehachse mit dem Haken verbunden ist. Dieser Fortsatz kann der Einfachheit halber plättchenförmig ausgebildet sein, besitzt aber die Möglichkeit einer Anbindung des Kraftspeichers. Hier genügt ein einfacher Stift, der mit dem Kraftspeicher in Verbindung steht. Beim Drehen des Hakens wird der Kraftspeicher gespannt und zieht dann beim Eingleiten des Gestängebolzens der Klinke in die Bolzenaufnahme den Haken über den Gestängebolzen. Ein Lösen dieser Verriegelung ist auch bei erheblichen Erschütterungen während des Transports der Stapelsäule nicht möglich.

Ein Vorteil dieses gewählten Kraftspeichers ist vor allem, dass kein Aufsummieren von Federkräften stattfindet. Jeder Haken hat seinen eigenen Kraftspeicher, der ihn betätigt. Dies gilt vor allem auch bei der Entriegelung, da bevorzugt zur Entriegelung aller Klinken ein Schieber vorgesehen ist, der senkrecht entlang der Seitenwange bewegt wird. Dabei durchgreifen die o.g. Stifte, an denen die Schraubenfeder festgelegt ist, eine Ausnehmung in dem Schieber, so dass eine untere Randkante der Ausnehmung beim Schieben des Schiebers diesen Stift mitnimmt, der wiederum über den oben erwähnten Fortsatz den Haken um seine Drehachse dreht. Da der Kraftspeicher andernends des Stiftes mit dem Schieber verbunden ist, muss so beim Verschieben des Schiebers keine zusätzliche Kraft aufgewendet und insbesondere keine Aufsummierung der Federkräfte der Schraubenfeder überwunden werden. Dies ist ein Vorteil der vorliegenden Erfindung, vor allem, wenn eine Mehrzahl von Klinken betätigt werden müssen.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
**Figur 1** eine perspektivische Ansicht einer erfindungsgemäßen Stapelsäule;
**Figur 2** eine etwas vergrößert dargestellte perspektivische Ansicht der Stapelsäule gemäß Figur 1 in Bereitschaftsstellung der zweiten Klinke;
**Figur 3** eine Seitendarstellung der Stapelsäule ähnlich Figur 2;
**Figur 4a) bis 4d****)** eine Seitenansicht der Stapelsäule gemäß Figur 1 in verschiedenen Gebrauchslagen.

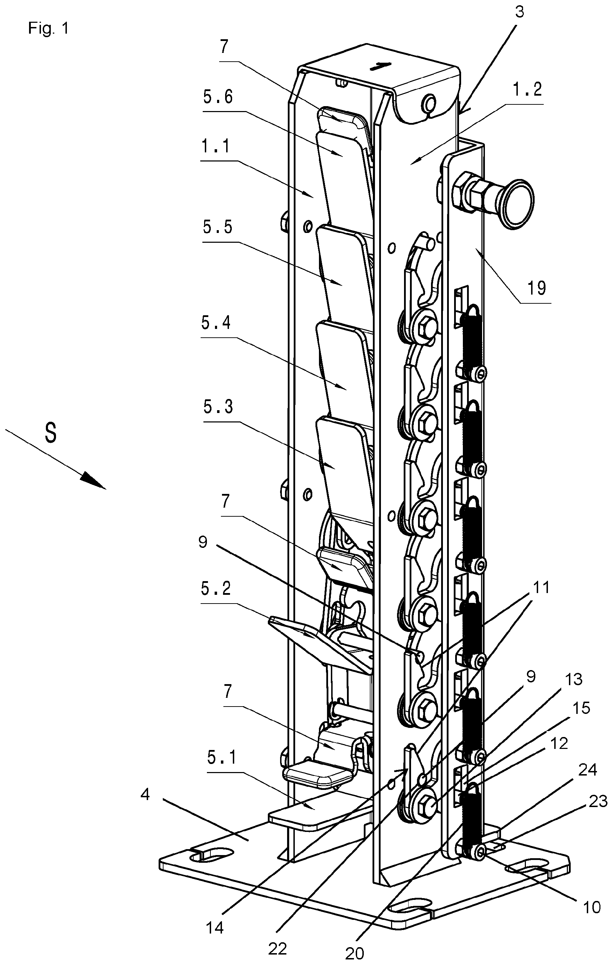

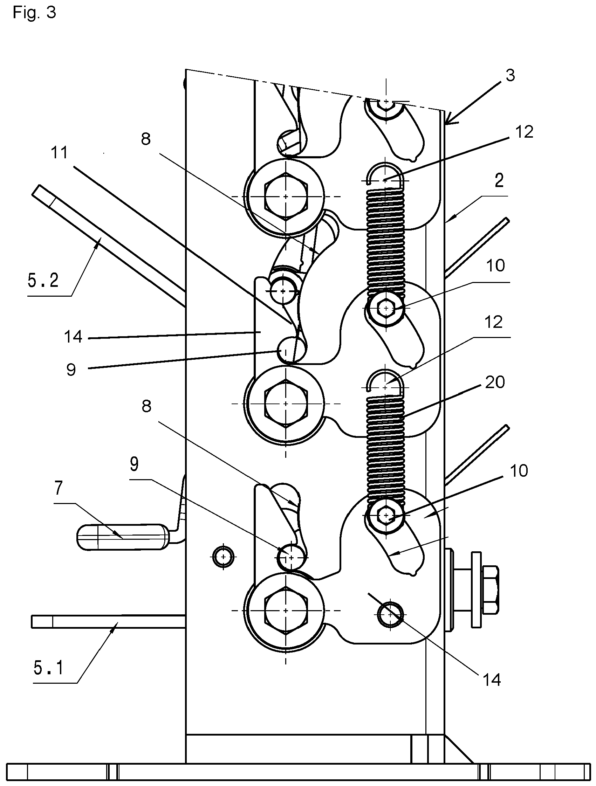

In Figur 1 ist eine Stapelsäule S gezeigt, bei der sich eine Mehrzahl von Klinken 5.1 bis 5.6 zwischen zwei Seitenwangen 1.1 und 1.2 befinden. Beide Seitenwangen 1.1 und 1.2 sind durch eine Rückwand 2 (siehe Figur 3) zu einem U-Körper 3 verbunden. Dieser U-Körper 3 sitzt auf einer Fußplatte 4 auf.

Bezüglich der Anordnung der Klinken und deren Tätigkeit wird ergänzend insbesondere auf die DE 20 2020 104 669 U1 verwiesen. Auch beim vorliegenden Ausführungsbeispiel befindet sich die unterste Klinke 5.1 in Arbeitsstellung, während die darauffolgende nächste Klinke 5.2 in Bereitschaftsstellung ist.

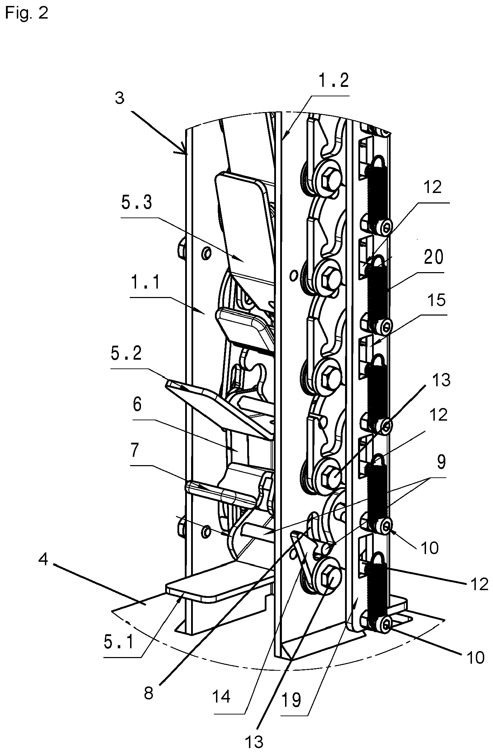

Über ein Gestänge 6 (siehe Figur 2) ist die unterste Klinke 5.1 mit den nachfolgenden Klinken 5.2 und 5.3 wirkverbunden, wobei letztere sich in Ruhestellung zwischen den Seitenwangen 1.1 und 1.2 befindet. Auch bezüglich der Ausführung des Gestänges 6 wird auf die oben genannte DE 20 2020 104 669 U1 verwiesen.

Des Weiteren werden auch Klemmklinken 7 bzw. Niederhalter gezeigt, die in Gebrauchslage das Ladegut gegen die Klinke 5.1-5.6 drücken und so insbesondere einer Erschütterung beim Transport entgegenwirken. Beispielsweise sind derartige Klemmklinken 7 in der DE 197 29 444 B4 gezeigt. Sie spielen aber für die vorliegende Erfindung keine Rolle.

Wie auch in der EP 3 231 740 A1 beschrieben, sind die Klinken 5.1-5.6 über jeweils einen Achsbolzen mit den sich gegenüberliegenden Seitenwangen 1.1, 1.2 verbunden, wobei die Klinken 5.1-5.6 um den Achsbolzen drehen. Der Übersichtlichkeit halber, sind vorliegend die Achsbolzen nicht gezeigt, sie befinden sich aber, wie auch in der EP 3 231 740 A1 im Bereich des Übergangs von der Rückwand 2 des U-Körpers 3 zu den Seitenwangen 1.1 bzw. 1.2, wobei der Achsbolzen zwischen den beiden Seitenwangen 1.1, 1.2 angeordnet ist.

Die gezeigte Stapelsäule S dient dem Lagern von Lagergütern übereinander oder nebeneinander in gegenseitigen Abständen auf jeweils einer der Klinken 5.1-5.6, welche zwischen zwei Seitenwangen 1.1, 1.2 drehbar an dem Achsbolzen gelagert ist.

Der nicht näher gezeigte Achsbolzen weist eine Achsbolzenfeder auf, die den Achsbolzen umgreift und mit einem Federbein an der Rückwand 2 anliegt und mit einem weiteren Federbein an der Klinke oder dem Gestängebolzen 9 anliegt. Die Achsbolzenfeder dient dem Zurückziehen der Klinke 5.1-5.6 aus der Arbeitsstellung in die Bereitschaftsstellung.

Die Seitenwangen 1.1, 1.2 bilden mit der gemeinsamen Rückwand 2 einen U-Körper 3, wobei der U-Körper 3 die Fußplatte 4 umfasst. Umfasst bedeutet in diesem Zusammenhang, dass der U-Körper 3 mit der Fußplatte 4 beispielsweise durch Schweissen gefügt ist.

Die Klinke 5.1-5.6 weist einen Gestängebolzen 9 auf. Der Gestängebolzen 9 ist innerhalb eines gebogenen Langlochs 8 der Seitenwange 1.1, 1.2 beweglich gelagert. Dadurch wird die Klinke 5.1-5.6 im Zusammenspiel mit dem Gestänge 6 innerhalb der Vorgabe des gebogenen Langlochs mobilisiert und kann dadurch wiederum von der Ruhestellung zunächst in die Bereitschaftsstellung und anschließend in die Arbeitsstellung verschwenkt werden.

Außerdem ist beispielsweise in der Figur 2 ein Gestänge 6 gezeigt, dass die Position der Klinke 5.1-5.6 aus einer Ruhestellung über eine Bereitschaftsstellung in eine Arbeitsstellung und wieder zurück schwenkbar bestimmt, wobei das Gestänge 6 mit dem Gestängebolzen 9 wirkverbunden ist. Das Gestänge 6 verbindet ist Klinken 5.1-5.6 in einer vorgegebenen Funktionalität und ist aus dem Stand der Technik hinreichend bekannt.

Der Gestängebolzen 9 durch eine der Seitenwangen 1.1, 1.2, in diesem Ausführungsbeispiel durch die Seitenwange 1.2 hindurch verlängert. Dadurch wird beim Verstellen der Klinke 5.1-5.6, welches durch das Zusammenspiel des Gestänges 6 mit dem Gestängebolzen 9 vollzogen wird, auch der Gestängebolzen 9 gleichzeitig für die Aktivierung der Verriegelung durch die Verriegelungskulisse 14 der einzelnen Klinke 5.1-5.6 genutzt.

Dabei fährt der Gestängebolzen 9 aus der Bereitschaftslage in die Arbeitslage an einer Schräge 11 einer Verriegelungskulisse 14 entlang und aktiviert dabei die Verriegelungskulisse 14 aus einer Ausgangslage in eine Verriegelungslage.

Die Verriegelungskulisse 14 ist zwischen der Seitenwange 1.1, 1.2, beziehungsweise in diesem Ausführungsbeispiel zwischen der Seitenwange 1.2 und einem Schieber 19 angeordnet.

Der Schieber 19 ist in diesem Ausführungsbeispiel ein Eckprofil und an dem Übergang der Seitenwange 1.2 zu der Rückwand 2 angeordnet.

Der Schieber 19 ist entlang der Seitenwange 1.2 bewegbar angeordnet. Allerdings umfasst der Schieber 19 zu der Seitenwange 1.1, 1.2 oder der Rückwand 2 eine Schieberfeder, die in den Figuren nicht näher gezeigt ist.

Der Schieber 19 ist gegen die Kraft der Schieberfeder bewegbar angeordnet, wobei die Ausnehmung 15 über die Federfixierung 12 die Verriegelungskulisse 14 in eine Entriegelungsposition bringt, also entriegelt. Dies geschieht dadurch, dass die Verrieglungskulisse 14 nicht wie beim Verriegelungsvorgang durch den Gestängebolzen 9 betätigt wird, sondern dadurch, dass der Schieber 19 von der Fußplatte 4 weggedrückt wird und dabei die Ausnehmung 15 mitgenommen wird, wobei die Ausnehmung 15 wiederum die Federfixierung 12 mitnimmt und die Verriegelungskulisse 14 eine identische Bewegung wie beim Verriegelungsvorgang durchführt. Nur dass dieses Mal die Schraubenfeder 20 nicht betätigt wird, sondern durch das Schwenken der Verriegelungskulisse 14 die nicht näher gezeigte Achsbolzenfeder des Achsbolzens der Klinke 5.1-5.6 die Klinke 5.1-5.6 wieder aus der verriegelten Arbeitsstellung in die nicht-verriegelte Bereitschaftsstellung zieht.

Die Verriegelungskulisse 14 ist über eine Drehachse 13 mit der Seitenwange 1.1, 1.2 verbunden.

Die Verriegelungskulisse 14 weist neben der Drehachse 13, auch eine Federfixierung 12 auf, wobei zwischen der Federfixierung 12 und einem Ankerpunkt 10 eine Schraubenfeder 20 angeordnet ist.

Der Gestängebolzen 9 ist derart eingerichtet, dass er an der Schräge 11 bis zu einer Bolzenaufnahme 22 entlang gleitet, wobei die Klinke 5.1-5.6 bei ihrem Weg von der Bereitschaftsstellung in die Arbeitsstellung die Verriegelungskulisse 14 betätigt und dabei die Schraubenfeder 20 eine Kraft aufnimmt, wobei beim Erreichen der Arbeitsstellung der Klinke 5.1 (wie sie beispielswiese in der Figur 1 gezeigt ist), ist der Gestängebolzen 9 in die Bolzenaufnahme 22 eingleitet, wobei die Schraubenfeder 20 die vorher aufgenommene Kraft wieder abgibt. In der Figur 1 ist die Klinke 5.1 verriegelt, und der dazugehörige Gestängebolzen 9 ist in die Bolzenaufnahme 22 eingefahren, sodass die Klinke 5.1 verriegelt ist.

Gleichzeitig ist die Klinke 5.2 in Bereitschaftsstellung und der dazugehörigen Gestängebolzen 9 wiederum am Anfang der dazugehörigen Schräge 11.

Weiter bildet die Verriegelungskulisse 14 zwischen der Schräge 11 und der Drehachse 13 eine Bolzenaufnahme 22 aus.

Die Federfixierung 12 ist ein Stabelement und ragt von der Verriegelungskulisse 14 weg und durch eine Ausnehmung 15 des Schiebers 19 von der Verriegelungskulisse 14 weg durch die Ausnehmung 15 des Schiebers 19 hindurch angeordnet ist und dabei die Schraubenfeder 20 zwischen dem Ankerpunkt 10 und der Federfixierung 12 angeordnet ist.

Diese Konstruktion hat den Vorteil, dass jede einzelne der Klinken 5.1-5.6 eine eigene Schraubenfeder 20 zur Durchführung und Sicherung der Verriegelung aufweist, und somit die benötigte Kraft zur Durchführung der Verriegelung durch die Auswahl der Kraft der Schraubenfeder 20 ausgewählt werden kann. Theoretisch wäre es sogar möglich jeder einzelnen Klinke 5.1-5.6 eine andere Kraft benötigende Schraubenfeder 20 zuzuordnen.

Weiter ist in der Figur 1 zu erkennen, dass die Fußplatte 4 eine Entriegelungsausnehmung 23 aufweist, wobei der Schieber 19 über der Entriegelungsausnehmung 23 eine Entriegelungszunge 24 ausbildet. Hintergrund ist, dass durch Betätigen des Schiebers 19 die Klinken 5.1-5.6 insgesamt auf einmal entriegelt werden. Dazu befindet sich auf einem definierten Untergrund eine Erhebung oder ein Pin oder dergleichen, der beim Absetzen der Stapelsäule durch die Entriegelungsausnehmung 23 hindurchgreift und gegen die Entriegelungszunge 24 drückt und damit den Schieber 19 gegen die Kraft einer nicht näher gezeigten Schieberfeder an dem U-Körper 3 von dem Untergrund wegdrückt.

Die Funktionalität der unteren Klinke 5.1 immer in Bereitschaftsstellung als Ausgangslage zurückzukehren und nicht in eine Ruhestellung zwischen den Seitenwangen 1.1, 1.2 zurückgeführt werden zu können, wird durch einen Anschlag erreicht, der genau ein Einfahren der unteren Klinke 5.1 in zwischen die beiden Seitenwangen 1.1, 1.2 verhindert.

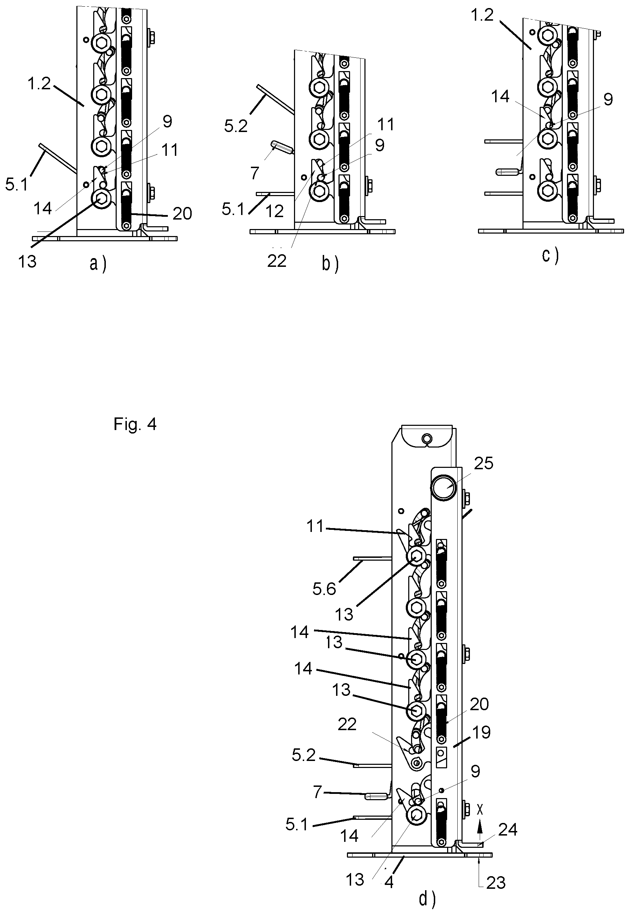

Die Funktionsweise der vorliegenden Erfindung ist folgende und wird vor allem anhand Figur 4 erläutert:
Die Ausgangslage ist in Figur 4a gezeigt, wobei sich hier die untere Klinke 5.1 in Bereitschaftsstellung befindet. Nunmehr wird gemäss Figur 4b ein nicht näher gezeigtes Ladegut auf die Klinke 5.1 aufgelegt, wobei diese über das Gestänge 6 die Klemmklinke 7 und die nachfolgende Klinke 5.2 mitnimmt. Die unterste Klinke 5.1 gelangt in Arbeitsstellung, wobei der Gestängebolzen 9 die Schräge 11 an Verriegelungskulisse 14 abläuft und in Endstellung in eine hinterschnittene Bolzenaufnahme 22 eingleitet. Dabei dreht die Verriegelungskulisse 14 um die Drehachse 13 und zieht dabei die Federfixierung 12 von der Fußplatte 4 weg. Hierdurch wird die Bolzenaufnahme 22 über den Gestängebolzen 9 gezogen. Damit ist die Klinke 5.1 verriegelt.

Beim Einführen des nächsten Ladegutes zwischen beispielsweise vier gleichartig ausgestalteten und im Rechteck angeordnete Stapelsäulen S wird nun über das Gestänge 6 die nachfolgende Klinke 5.2 aus der Bereitschaftsstellung in die Arbeitsstellung verbracht, wie dies in Figur 4c gezeigt ist. Dabei ist der Vorgang der Verriegelung der Gleiche, so dass hier auch die gleichen Bezugszeichen verwendet werden. Auf diese Weise wird eine Klinke nach der anderen beladen und verriegelt. Das Verriegeln jeder der einzelnen Klinke 5.1 bis 5.6 für sich, birgt den Vorteil, dass auch eine Teilbeladung der Stapelsäule S möglich ist, ohne dass die nicht genutzten Klinken 5.1 bis 5.6 ebenfalls in die Arbeitslage gedrückt werden müssen. Bei einer Teilbeladung werden also tatsächlich nur diejenigen Klinken 5.1 bis 5.6 durch das Ladegut in Arbeitslage gebracht, die benötigt werden.

Zum Entriegeln der gesamten Klinken 5.1 bis 5.6 wird der Schieber 19 gemäss Figur 4d verwendet. Er wird in Richtung x angehoben, was auf beliebige Art und Weise geschehen kann. Beispielsweise könnte die Stapelsäule nach einem Transport mit Ladegut an anderer Stelle einer Werkshalle auf einen nicht gezeigten Stössel gesetzt werden, der ein Entriegelungsausnehmung 23 in der Fußplatte 4 durchdringt und auf die Entriegelungszunge 24 an dem Schieber 19 trifft, so dass der Schieber 19 entlang von Führungsbolzen nach oben geführt werden kann. Dabei trifft eine untere Randkante der Ausnehmung 15 (siehe Figur 2) auf die Federfixierung 12, der von der Verriegelungskulisse 14 abragt. Diese untere Randkante nimmt die Federfixierung 12 mit und dreht somit die Verriegelungskulisse 14 um die Drehachse 13, so dass der Gestängebolzen 9 aus der Bolzenaufnahme 22 ausfahren kann.

Sobald alle Lagergüter entnommen sind, wird eine beliebige Festlegung des Schiebers 19 gelöst, so dass dieser wieder senkrecht nach unten fällt und dabei Verriegelungskulissen 14 über die Schraubenfedern 20 in ihre Ausgangslage, die in Figur 1 gezeigt ist, zurückkehren.

### Bezugszeichenliste

| | |
|---|---|
| 1.1, 1.2 | Seitenwange |
| 2 | Rückwand |
| 3 | U-Körper |
| 4 | Fußplatte |
| 5 | Klinke |
| 6 | Gestänge |
| 7 | Klemmklinke |
| 8 | gebogenes Langloch |
| 9 | Gestängebolzen |
| 10 | Ankerpunkt |
| 11 | Schräge |
| 12 | Federfixierung |
| 13 | Drehachse |
| 14 | Verriegelungskulisse |
| 15 | Ausnehmung |
| 16 | |
| 17 | |
| 18 | |
| 19 | Schieber |
| 20 | Schraubenfeder |
| 21 | |
| 22 | Bolzenaufnahme |
| 23 | Entriegelungsausnehmung |
| 24 | Entriegelungszunge |
| 25 | |
| 26 | |
| 27 | |
| 28 | |
| S | Stapelsäule |
| x | Anheben |

## Patentansprüche

1. Stapelsäule zum Lagern von Lagergütern übereinander oder nebeneinander in gegenseitigen Abständen auf einer Klinke (5.1-5.6), welche zwischen zwei Seitenwangen (1.1, 1.2) drehbar an einem Achsbolzen gelagert ist, wobei die zwei Seitenwangen (1.1, 1.2) mit einer gemeinsamen Rückwand (2) einen U-Körper (3) bilden, wobei der U-Körper (3) eine Fußplatte (4) umfasst, wobei die Klinke einen Gestängebolzen (9) aufweist, wobei der Gestängebolzen (9) innerhalb eines gebogenen Langlochs (8) der Seitenwange (1.1, 1.2) beweglich ist und damit die Klinke (5.1- 5.6) mobilisiert,
**dadurch gekennzeichnet,**
**dass** der Gestängebolzen (9) durch eine der Seitenwangen (1.1, 1.2) hindurch verlängert ist, wobei der Gestängebolzen (9) aus der Bereitschaftslage in die Arbeitslage fahrend an einer Schräge (11) einer Verriegelungskulisse (14) entlang gleitet und dabei die Verriegelungskulisse (14) aus einer Ausgangslage in eine Verriegelungslage bringt, wobei die Verriegelungskulisse (14) zwischen der Seitenwange (1.1, 1.2) und einem Schieber (19) angeordnet ist, wobei die Verriegelungskulisse (14) eine Drehachse (13) und eine Federfixierung (12) aufweist, wobei zwischen der Federfixierung (12) und einem Ankerpunkt (10) eine Schraubenfeder (20) angeordnet ist, wobei die Federfixierung (12) durch einen Ausnehmung (15) des Schiebers (19) von der Verriegelungskulisse (14) weg durch den Ausnehmung (15) des Schiebers (19) hindurch angeordnet ist und die Schraubenfeder (20) zwischen dem Ankerpunkt (10) und der Federfixierung (12) angeordnet ist.

2. Stapelsäule nach Anspruch 1, **dadurch gekennzeichnet, dass** die Verriegelungskulisse (14) zwischen der Schräge (11) und der Drehachse (13) eine Bolzenaufnahme (22) ausbildet.

3. Stapelsäule nach Anspruch 2, **dadurch gekennzeichnet, dass** der Gestängebolzen (9) an der Schräge (11) bis zur Bolzenaufnahme (22) entlang gleitend eingerichtet ist, wobei die Klinke (5.1-5.6) bei ihrem Weg von der Bereitschaftsstellung in die Arbeitsstellung die Verriegelungskulisse (14) betätigt und dabei die Schraubenfeder (20) eine Kraft aufnimmt, wobei beim Erreichen der Arbeitsstellung der Klinke der Gestängebolzen (9) in die Bolzenaufnahme (22) eingleitet, wobei die Schraubenfeder (20) die Kraft abgibt.

4. Stapelsäule nach Anspruch 2 oder 3, **dadurch gekennzeichnet, dass** die Verriegelungskulisse (14) über eine Drehachse (13) mit der Seitenwange (1.1, 1.2) verbunden ist.

5. Stapelsäule nach einem der vorigen Ansprüche, **dadurch gekennzeichnet, dass** der Schieber (19) ein Eckprofil ist und an dem Übergang der Seitenwange (1.1, 1.2) zu der Rückwand (2) angeordnet ist.

6. Stapelsäule nach einem der vorigen Ansprüche, **dadurch gekennzeichnet, dass** der Schieber (19) entlang der Seitenwange (1.1, 1.2) bewegbar ist.

7. Stapelsäule nach einem der vorigen Ansprüche, **dadurch gekennzeichnet, dass** der Schieber (19) zu der Seitenwange (1.1, 1.2) oder der Rückwand (2) eine Schieberfeder angeordnet ist, wobei der Schieber (19) gegen die Kraft der Schieberfeder bewegbar ist, wobei der Ausnehmung (15) über die Federfixierung (12) die Verriegelungskulisse (14) entriegelt.

8. Stapelsäule nach einem der vorigen Ansprüche, **dadurch gekennzeichnet, dass** die Fußplatte (4) einen Entriegelungsausnehmung (23) aufweist, wobei der Schieber (19) über der Entriegelungsausnehmung (23) einen Entriegelungszunge (24) aufweist.

9. Stapelsäule nach einem der vorigen Ansprüche, **dadurch gekennzeichnet, dass** der Achsbolzen eine Achsbolzenfeder aufweist, die den Achsbolzen umgreift und mit einem Federbein an der Rückwand (2) anliegt und mit einem weiteren Federbein an der Klinke (5.1-5.6) oder dem Gestängebolzen (9) anliegt.

10. Stapelsäule nach einem der vorigen Ansprüche, **dadurch gekennzeichnet, dass** ein Gestänge (6) die Position der Klinke (5.1-5.6) aus einer Ruhestellung über eine Bereitschaftsstellung in eine Arbeitsstellung und wieder zurück schwenkbar bestimmt, wobei das Gestänge (6) mit dem Gestängebolzen (9) wirkverbunden ist.
